# EUROPÄISCHE PATENTSCHRIFT

(11) **EP 2 075 050 B1**
(45) Veröffentlichungstag und Bekanntmachung des Hinweises auf die Patenterteilung: **05.05.2010**
(21) Anmeldenummer: 08016329.8
(22) Anmeldetag: 17.09.2008
(51) Int. Cl.: B01D 53/94, F01N 3/20

(54) **Verfahren und Vorrichtung zur Verbesserung der Hydrolyse eines Reduktionsmittels in einem Abgasnachbehandlungssystem**
Method and apparatus for improving the hydrolysis of a reducing agent in a waste gas treatment system
Procédé et dispositif d'amélioration de l'hydrolyse d'un moyen de réduction dans un système de retraitement des gaz d'échappement

(30) Priorität: 18.12.2007 DE 102007061005
(43) Veröffentlichungstag der Anmeldung: 01.07.2009
(73) Patentinhaber: MAN Nutzfahrzeuge Aktiengesellschaft, 80995 München (DE)
(72) Erfinder: Döring, Andreas, 80339 München (DE)

(56) Entgegenhaltungen:
- EP-A- 1 052 009
- DE-A1- 10 206 028

## Beschreibung

Gegenstand der Erfindung ist ein Verfahren zur Verbesserung der Hydrolyse eines Reduktionsmittels in einem Abgasnachbehandlungssystem bei mit Luftüberschuss betriebenen Brennkraftmaschinen, wie Dieselmotoren und Ottomotoren mit Direkteinspritzung, gemäß dem Oberbegriff des Anspruches 1, sowie eine Anordnung zur Durchführung des Verfahrens.

Neben Feststoffpartikeln gehören Stickoxide zu den limitierten Abgaskomponenten, die während Verbrennungsvorgängen entstehen und deren erlaubte Emissionen immer weiter abgesenkt werden. Zur Minimierung dieser Abgaskomponenten bei in Kraftfahrzeugen betriebenen Brennkraftmaschinen werden heute unterschiedliche Verfahren eingesetzt. Die Verringerung der Stickoxide geschieht meist mit Hilfe von Katalysatoren, in sauerstoffreichem Abgas ist zusätzlich ein Reduktionsmittel erforderlich, um die Selektivität und die NO_{X} -Umsätze anzuheben. Bekannt geworden sind diese Verfahren unter dem Sammelbegriff SCR-Verfahren, wobei SCR für "selektive katalytische Reduktion" steht. Ihr Einsatz erfolgt seit vielen Jahren im Kraftwerksbereich und in jüngster Zeit auch bei Brennkraftmaschinen. Eine ausführliche Darstellung solcher Verfahren ist der DE 34 28 232 A1 zu entnehmen. Als SCR-Katalysatoren können V₂O₅-haltige Mischoxide, beispielsweise in der Form V₂O_{S}/WO₃/TiO₂, verwendet werden. Typische V₂O₅-Anteile liegen dabei zwischen 0,2-3%. Daneben sind als Aktivmaterialien für SCR-Katalysatoren auch eisen- oder kupferhaltigen Zeolithe gebräuchlich.

Als Reduktionsmittel kommen in der praktischen Anwendung Ammoniak oder Ammoniak abspaltende Verbindungen, wie Harnstoff oder Ammoniumformiat, in fester oder Lösungsform zum Einsatz. Für die Umsetzung von einem Mol Stickstoffmonoxid ist dabei ein Mol Ammoniak notwendig.

4NO+4NH₃+O₂ ⇒ 4N₂ +6H₂O (1)

Wird den SCR-Katalysatoren ein platinhaltiger NO-Oxidationskatalysator zur Bildung von NO₂ vorgeschaltet

2NO+O₂ ⇔ 2NO₂ (2)

so kann die SCR-Reaktion erheblich beschleunigt und die Tieftemperaturaktivität merklich angehoben werden.

NO+2NH₃+NO₂ ⇒ 2N₂+3H₂O (3)

Je nach Ausführung der Katalysatoren, Platingehalt und Anwendungsfall weisen die Katalysatoren Anspringtemperaturen zwischen 180°C - 330°C auf. Als Anspringtemperatur bezeichnet man hierbei diejenige Temperatur, bei der 50% des Stickstoffinonoxids zu Stickstoffdioxid oxidiert wird.

Bei in Fahrzeugen betriebenen Brennkraftmaschinen gestaltet sich die Stickoxidreduzierung mit Hilfe des SCR-Verfahrens deshalb schwierig, weil dort wechselnde Betriebsbedingungen vorliegen, was die mengenmäßige Zumessung des Reduktionsmittels erschwert. Es soll zwar einerseits ein möglichst hoher Umsatz an Stickoxiden erreicht werden, andererseits ist aber darauf zu achteten, dass es nicht zur Emission von unverbrauchtem Ammoniak kommt. Um Letzteres zu verhindern, wird häufig ein dem SCR-Katalysator nachgeordneter Ammoniak-Sperrkatalysator eingesetzt, der überschüssigen Ammoniak zu Stickstoff und Wasserdampf umsetzt. Besondere Probleme bereitet der sogenannte Kaltstart, bei dem die Abgasemissionen auch nach einem Start des kalten Motors und damit nicht betriebwarmem Nachbehandlungssystem eingehalten werden müssen.

Zur Minimierung der Feststoffpartikel werden sowohl im Kraftwerksbereich als auch bei Fahrzeugen entweder sogenannte Partikelabscheider oder Partikelfilter eingesetzt. Eine für die Anwendung in Fahrzeugen typische Anordnung mit Partikelabscheider ist beispielsweise in der EP 1 072 765 A2 beschrieben. Derartige Anordnungen unterscheiden sich von solchen mit Partikelfiltern dadurch, dass der Durchmesser der Kanäle des Partikelabscheiders wesentlich größer als der Durchmesser der größten vorkommenden Partikel ist, während bei Partikelfiltern der Durchmesser der Filterkanäle im Bereich der Durchmesser der Partikel liegt. Infolge dieses Unterschiedes sind Partikelfilter verstopfungsgefährdet, was den Abgasgegendruck erhöht und die Motorleistung mindert. Eine Anordnung und ein Verfahren, das an Stelle eines Partikelabscheiders der vorstehend beschriebenen Art einen Partikelfilter einsetzt, ist der EP 0 341 832 A2 zu entnehmen. Die vorgenannten Anordnungen bzw. Verfahren zeichnen sich dadurch aus, dass der jeweils stromauf zum Partikelabscheider bzw. Partikelfilter angeordnete Oxidationskatalysator - zumeist ein Katalysator mit Platin als Aktivmaterial - das Stickstoffmonoxid im Abgas mit Hilfe des ebenfalls enthaltenen Restsauerstoffes zu Stickstoffdioxid oxidiert, das sich wiederum im Partikelabscheider, bzw. Partikelfilter mit den Kohlenstoffpartikeln zu CO, CO₂, N₂ und NO umsetzt. Auf diese Weise erfolgt bei relativ niedrigen Temperaturen eine kontinuierliche Entfernung der angelagerten Feststoffpartikel,

2 NO₂ + C ⇒ 2 NO + CO₂ (4)

NO₂ + C ⇒ NO + CO (5)

2 C + 2 NO₂ ⇒ N₂ + 2CO₂ (6)

Regenerationszyklen, wie sie aufwändig bei anderen Anordnungen durchgeführt werden müssen, um bei relativ hohen Temperaturen die Kohlenstoffhaltigen Rußpartikel bei relativ hohen Temperaturen mit Hilfe von Sauerstoff zu oxidieren entfallen dadurch.

Um die zukünftig geltenden Abgasbestimmungen zu erfüllen, ist der gleichzeitige Einsatz sowohl von Anordnungen zur Reduzierung der Stickoxidemission, als auch von Anordnungen zur Reduzierung der Feststoffpartikelemission erforderlich. Hierzu sind mit der DE 103 48 799 A1 und der EP 1 054 722 B1 bereits verschiedene Anordnungen und Verfahren bekannt geworden.

Als Reduktionsmittel für die SCR-Reaktion hat sich, wie bereits erwähnt, im Kraftwerksbereich Ammoniak bewährt, das allerdings auf Grund seiner Toxizität bei in Fahrzeugen betriebenen Brennkraftmaschinen durch ungefährliche ammoniakabspaltenden Verbindungen, wie Harnstoff oder Ammoniumformiat, in fester oder wässriger Form, ersetzt wird. Die Zersetzung dieser Stoffe und damit die Freisetzung von Ammoniak ist beim SCR-Verfahren ausschlaggebend für die Einsetzbarkeit des Verfahrens.

Im Zusammenhang mit der Zersetzung von Harnstoff ((NH₂)₂CO) in Ammoniak (NH₃) ist bekannt, dass dies unter optimalen Bedingungen (Temperaturen über 350° C) in zwei Stufen geschieht, nach

(NH₂)₂CO ⇒ NH₃ + HNCO (7)

erfolgt zunächst die Thermolyse, d. h. die thermische Zersetzung von Harnstoff. Anschließend erfolgt nach

HNCO + H₂O ⇒ NH₃ + CO₂ (8)

eine Hydrolyse, also die Zersetzung von Isocyansäure (HNCO) in Ammoniak (NH₃) und Kohlendioxid (CO₂).

Da das Reduktionsmittel bei der Verwendung der heute marktüblichen, mit AdBlue bezeichneten 33%igen wässrigen Harnstofflösung, in einer in Wasser gelösten Form vorliegt, muss dieses Wasser vor und während der eigentlichen Thermo- und Hydrolyse verdampfen.

Sind die bei der vorstehenden Reaktion nach (7) und (8) vorliegenden Temperaturen unter 350°C bzw. wird nur langsam erhitzt, ist es aus der DE 40 38 054 A1 bekannt, dass hauptsächlich feste Cyanursäure durch Trimerisierung der nach (7) gebildeten Isocyansäure gemäß

3HNCO ^{<350°C →}_{← >350°C} (HNCO)₃ (9)

und in Folge davon Ammelid,

Cyanursäure + NH₃ ⇒ Ammelid + H₂O (10)

Ammelin

Ammelid + NH₃ ⇒ Ammelin + H₂O (11)

und Melamin

Ammelin + NH₃ ⇒ Melamin + H₂O (12)

entstehen, die zur Verstopfung des nachfolgenden Abgastraktes führen. Abhilfe kann, wie in der erwähnten DE 40 38 054 ausgeführt, dadurch geschaffen werden, dass der mit dem Reduktionsmittel beladene Abgasstrom über einen Harnstoffzersetzungs- und Hydrolysekatalysator geführt wird. Die Abgastemperatur, ab der eine quantitative Hydrolyse möglich wird, lässt sich so auf 160°C drücken. Aufbau und Zusammensetzung eines entsprechenden Katalysators sind in der erwähnten Publikation ebenso beschrieben wie Aufbau und Funktion eines mit einem Hydrolysekatalysator ausgestatteten SCR-Katalysator-Systems. Als Aktivkomponenten für einen Harnstoffzersetzungs- und Hydrolysekatalysator kommen TiO₂ und/oder SiO₂ und/oder Al₂O₃ und/oder Zeolithe zum Einsatz. Um die Katalysatoren zu verkleinern, aber die Verweilzeit in den Katalysatoren konstant zu lassen, werden die Hydrolysekatalysatoren oft in einem Abgasteilstrom betrieben, der dem Hauptstrom entnommen wird, wie dies die EP 1052009 A1 zeigt. Besonders vorteilhaft ist es dabei, den Abgasteilstrom möglichst motornah zu entnehmen, um den Hydrolysekatalysator auf einem hohen Temperaturniveau betreiben zu können. Bei abgasaufgeladenen Brennkraftmaschinen ist es vorteilhaft, den Abgasteilstrom bereits vor dem Turbolader zu entnehmen und ihn stromab des Turboladers wieder zurückzuführen entsprechende Anordnungen sind in der DE 10206028 A1, der DE 19855384 A1 und der DE 19960976 A1 beschrieben.

Weiter ist es aus der bereits erwähnten EP 1052009 A1 bekannt, die durch den Hydrolysekatalysator geführte Abgasmasse auch bei starken Schwankungen von Abgasmasse und -temperatur optimal an das Umsetzungsvermögen des Katalysators anzupassen, dies geschieht durch eine Veränderung der aus dem Gesamtabgasstrom entnommene Teilstrom mit Hilfe einer Drosselvorrichtung und Regelvorrichtung. Nachteilig dabei ist, dass es, bei Verwendung des optimalen Umsetzungsvermögens des Katalysators als Führungsgröße für die Regelung, dann zu einem raschen Verlassen des optimalen Umsetzungsvermögensbereiches führt, wenn die Abgastemperatur stark abfällt, wie dies z.B. bei negativen Lastsprüngen der Fall ist.

Ist der Hydrolysekatalysator überlastet, indem er z.B. bei zu geringen Temperaturen und/oder hohen Reduktionsmitteldosiermengen betrieben wird, so gelingt keine quantitative Hydrolyse der Isocyansäure. Besonders problematisch ist dies bei der Verwendung von wässriger Harnstofflösung, da durch die Verdampfung des Wassers dem Abgas zusätzlich Wärme entzogen und diese somit abgekühlt wird. In einem solchen Fall bilden sich, wie vorstehend ausgeführt, thermisch sehr stabile Nebenprodukte wie Cyanursäure, Ammelid, Ammelin und Melamin. Diese Feststoffe lagern sich auf den Hydrolysekatalysatoren, den Harnstoffeinspritzdüsen und den Rohrleitungen ab, was bis zur kompletten Blockierung des Abgasstromes bzw. dem Ausfall des SCR-Systems führen kann. Die Zersetzung dieser Stoffe gelingt erst oberhalb von 450°C - 500°C vollständig. Allerdings liegen die Abgastemperaturen moderner Dieselmotoren auf Grund ihrer hohen Wirkungsgrade üblicherweise unterhalb von 400°C. Dies hat zur Folge, dass eventuell gebildete Ablagerungen ohne zusätzliche Maßnamen nicht wieder entfernt werden können.

Eine Möglichkeit die Abgastemperatur auf ein entsprechendes Niveau anzuheben, besteht, wie in der DE 3605255 A1 beschrieben, darin, Motorparameter, wie beispielsweise den Spritzbeginn zu verstellen oder das Kraftstoff=/Luftverhältnisses abzusenken.

Darüber hinaus kann der Anteil von unverbrannten Kohlenwasserstoffen und/oder Kohlenmonoxid im Abgas erhöht werden, um diese Stoffe dann, gegebenenfalls katalytisch, zu oxidieren und damit die Abgastemperatur zu erhöhen. Entsprechende Anordnungen und Verfahren sind der DE 102005023398 A1, der DE 10323245 A1 und der DE 60210528 T2 zu entnehmen.

Neben dem Anheben des Temperaturniveaus durch exotherme Reaktionen ist es aus der DE 19960976 A1 weiter bekannt, den Hydrolysekatalysator zur Temperaturanhebung elektrisch zu beheizen.

Allen vorstehenden Varianten zur Anhebung der Temperatur ist gemein, dass sie zu einer Erhöhung des Kraftstoffverbrauchs und damit einer Verschlechterung des Wirkungsgrades der Brennkraftmaschine führen.

Es ist deshalb Aufgabe der Erfindung, unter Vermeidung einer Verschlechterung des Wirkungsgrades der Brennkraftmaschine die Funktionsfähigkeit eines in einem Nebenstrom eines Abgasnachbehandlungssystems betriebenen Hydrolysekatalysators über einen großen Betriebsparameterbereich der Brennkraftmaschine sicherzustellen und darüber hinaus sicher zu verhindern, dass sich im Abgasnebenstrom oder stromab davon problematische Feststoffablagerungen wie Cyanursäure, Ammelid, Ammelin und Melamin bilden.

Gelöst wird die Aufgabe durch ein Verfahren gemäß Anspruch 1, die Ansprüche 2 bis 8 bilden das erfindungsgemäße Verfahren vorteilhaft weiter, eine Anordnung zur Durchführung des Verfahrens ist in den Ansprüchen 9 bis 18 gekennzeichnet,

Das erfindungsgemäße Verfahren kommt bei einem Abgasnachbehandlungssystem zur selektiven katalytischen Reduktion von Stickoxiden zur Anwendung, wobei stromauf zum SCR-Katalysator vom Abgasstrom ein gegenüber diesem kleinerer Abgasteilstrom abzweigt, in dem eine Dosiereinrichtung zum Zuführen eines Reduktionsmittels und stromab dazu ein Hydrolysekatalysator angeordnet ist und wobei der Abgasteilstrom stromab zum Hydrolysekatalysator und stromauf zum SCR-Katalysator in den Abgasstrom zurückgeführt ist.

Die Erfindung geht von der Überlegung aus, die Temperatur am Hydrolysekatalysator in vorteilhafter Weise durch eine aktive Steuerung oder Regelung der über den Abgasteilstrom geführten Abgasmenge in vorgegebenen Grenzen zu halten und so das Auskühlen des Hydrolysekatalysators ohne Beeinflussung des Wirkungsgrades der Brennkraftmaschine zu vermeiden. Hierfür wird mittels einer im Abgasteilstrom, stromauf oder stromab zum Hydrolysekatalysator angeordneten Drosselvorrichtung, die ansteuer- oder regelbar ist, der Abgasteilstrom ganz oder teilweise abgesperrt bzw. geöffnet, wenn gemessene oder indirekt bestimmte Temperaturschwellwerte am Hydrolysekatalysator unter- oder überschritten werden oder bestimmte Betriebszustände der Brennkraftmaschine eintreten.

So wird die Abgasmenge bei geringer Temperatur des Hydrolysekatalysators und dem Vorliegen einer hohen Abgastemperatur vor dem Hydrolysekatalysator und/ oder von Betriebsparametern der Brennkraftmaschine, die zu einer solchen hohen Abgastemperatur führen, durch Öffnen der Drosselvorrichtung erhöht, um ein vorteilhaftes Aufheizen des Hydrolysekatalysators zu bewirken. Bei geringer Temperatur am Hydrolysekatalysator und/ oder dem Vorliegen einer geringen Abgastemperatur und/ oder von Betriebsparametern der Brennkraftmaschine, die zu einer geringen Abgastemperatur führen, wird durch das teilweise Schließen der Drosselvorrichtung die Abgasmenge soweit reduziert, wie es die zuzuführende Reduktionsmittelmenge noch zulässt, um eine ordnungsgemäße Aufnahme des Reduktionsmittels in den Abgasteilstrom zu gewährleisten. Es kann so in vorteilhafter Weise ein Auskühlen des Hydrolysekatalysators verhindert werden.

Weiter ist es für das Verhindern eines weiteren Auskühlens des Hydrolysekatalysators vorteilhaft, dass dann, wenn ein erster Temperaturschwellwert am Hydrolysekatalysator unterschritten wird, zusätzlich zum teilweise Absperren des Abgasteilstroms, die Dosiereinrichtung so anzusteuern, dass die Zufuhr des Reduktionsmittels reduziert oder unterbunden wird. Dies geschieht unabhängig vom tatsächlichen Bedarf für die vollständige Reduktion der Stickoxide,

Bei Unterschreiten einer unteren Temperaturschwelle am Hydrolysekatalysator und bei gleichzeitigem Vorliegen einer Abgastemperatur unterhalb eines vorgegebenen Grenzwertes, ist es von Vorteil, die Drosselvorrichtung ganz zu schließen und die Zufuhr von Reduktionsmittel über die Dosiereinrichtung zu unterbinden.

Bei geschlossener Drosselvorrichtung und unterbundener Reduktionsmittelzufuhr wird dann, wenn die Abgastemperatur auf einen Wert oberhalb eines vorgegebenen Grenzwertes ansteigt und/ oder Betriebsparametern der Brennkraftmaschine vorliegen die zu einem solchen Anstieg der Abgastemperatur führen, die Drosselvorrichtung geöffnet und die Zufuhr von Reduktionsmittel über die Dosiereinrichtung freigegeben, so dass der Hydrolysekatalysator aufgeheizt wird.

Wird eine vorbestimmte obere Temperaturschwelle am Hydrolysekatalysator überschritten, kann durch das zumindest teilweise Schließen der Drosselvorrichtung die über den Abgasteilstrom geführte Abgasmenge soweit reduziert wird, dass ein weiterer Temperaturanstieg am Hydrolysekatalysator vermieden wird, wodurch in vorteilhafter Weise einer thermischen Schädigung des Hydrolysekatalysators entgegengewirkt werden kann.

Bei der vorstehend beschriebenen Vorgehensweise können Abgastemperaturen und die Temperatur am Hydrolysekatalysator vorteilhaft messtechnisch direkt mittels Temperatursensoren bestimmt werden. Natürlich besteht auch die Möglichkeit der indirekten Bestimmung z.B. der Temperatur am Hydrolysekatalysator mittels zweier Temperatursensoren zur Bestimmung der Abgastemperatur vor und nach dem Hydrolysekatalysator, wobei in diesem Fall auch die mittels der Dosiereinrichtung zugegebene Reduktionsmittelmenge bzw. Reduktionsmitteltemperatur Berücksichtigung finden kann.

Weiter besteht die Möglichkeit, die Temperatur des Hydrolysekatalysators ebenso wie die Abgastemperatur über Modelle zu bestimmen, indem die Temperaturverläufe am Hydrolysekatalysator in Abhängigkeit von Betriebsparametern der Brennkraftmaschine, wie Kraftstoffeinspritzmenge und/oder Abgasdruck und/oder Ladedruck und/oder die Öltemperatur und/oder Motorkühlmitteltemperatur und/oder Umgebungstemperatur und/oder Motordrehzahl und/oder Dosiermenge für das Reduktionsmittel an einer Referenzbrennkraftmaschine ermittelt und in einem Steuergerät der Brennkraftmaschine in Form von Kennlinien, Kennfeldern, Funktionen oder neuronalen Netzen gespeichert werden. Bei Vorliegen bestimmter Betriebsparameter bzw. deren zeitlicher Abfolge, kann dann unter Zuhilfenahme der Kennlinien oder Kennfelder auf die Temperatur des Hydrolysekatalysators bzw. auf die Abgastemperaturen vor und nach dem Hydrolysekatalysator geschlossen werden.

Eine vorteilhafte Anordnung zur Durchführung des Verfahrens nach Anspruch 1 sieht im Abgasteilstrom eine Drosselvorrichtung vor, wobei die Drosselvorrichtung mittels einer, von einer Steuereinheit mittels eines Steuersignals beaufschlagbaren Antriebseinrichtung antreibbar ist. Das Steuersignal ist dabei vorteilhaft in Abhängigkeit von wenigstens einem ersten Signalwert, der wenigstens einem vorgegebenen Temperaturwert am Hydrolysekatalysator entspricht und/oder wenigstens einem zweiten Signalwert, der wenigstens einem vorgegebenen Temperaturwert im Abgasstrom oder Abgasteilstrom stromauf zum Hydrolysekatalysator entspricht und/ oder wenigstens einem dritten Signalwert der wenigstens einem vorgegebenen Wert wenigstens eines Betriebsparameters der Brennkraftmaschine entspricht, durch die Steuereinheit gebildet.

Zur Erzeugung des Steuersignals ist es von Vorteil, mittels der Steuereinheit Sensorsignale, die in Abhängigkeit von der Gaspedalstellung und/ oder der Kraftstoffeinspritzmenge und/oder dem Abgasdruck und/oder dem Ladedruck und/oder der Öltemperatur und/oder der Motorkühlmitteltemperatur und/oder der Umgebungstemperatur und/oder der Motordrehzahl und/oder der Dosiermenge für das Reduktionsmittel und/ oder der Abgastemperaturen und/ oder der Temperatur des Hydrolysekatalysators gewonnen werden, zu erfassen und logisch zu verknüpfen.

Die Zuführung des Reduktionsmittels im Abgasteilstrom kann stromab, aber auch stromauf, der Drosselvorrichtung erfolgen. Eine Zuführung stromauf der Drosselvorrichtung ist zu bevorzugen, da durch das Entspannen über die Drossel die Gastemperatur sinkt.

Mögliche Aktivkomponenten für den Hydrolysekatalysator sind Titan und/oder Silizium und/oder Vanadium und/oder Wolfram und/oder deren Oxide und/oder Zeolithe.

Die Katalysatoren zur Reduktion von Stickoxiden mit Hilfe von Ammoniak können als Aktivkomponente Vanadium und/oder Vanadiumpentoxid und/oder Titandioxid und/oder Wolframoxid und/oder kupferhaltige Zeolithe und/oder eisenhaltige Zeolithe und/oder kobalthaltige Zeolithe enthalten.

Weiterhin kann im Abgasteilstrom und noch vor der Rückführung in den Hauptstrom ein zweiter SCR-Katalysator angebracht werden.

Der Abgasteilstrom kann dem Abgasstrom stromauf einer Abgasturbine eines Abgasturboladers entnommen werden, um in vorteilhafter Weise ein möglichst hohes Temperaturniveau im Abgasteilstrom zu erhalten.

Um die SCR-Reaktion zu beschleunigen, können im Abgasteilstrom und/oder im Abgasstrom platinmetallhaltige Katalysatoren zur Bildung von NO₂ angebracht sein.

Eine weitere mögliche Anordnung besteht darin, stromab der Zuführung des Reduktionsmittels eine Vorrichtung zur Abscheidung von Partikeln anzubringen, so dass zusätzlich die Partikelemissionen verringert werden können. Diese Vorrichtung kann stromauf oder stromab des SCR-Katalysators angeordnet sein.

Zur vorteilhaften Steigerung des NO_{X}-Umsatzes kann der Hydrolysekatalysator so ausgebildet sein, dass er gleichzeitig Reduktionsaktivität für Stickoxide mit Hilfe von Ammoniak aufweist.

Die Drosselvorrichtung kann als Klappe oder Schieber oder Nadelventil oder als Kugelventil oder Tellerventil ausgeführt sein, ihre Ansteuerung kann elektrisch, pneumatisch oder hydraulisch erfolgen.

Nachfolgend wird die Erfindung mit Hilfe der Zeichnungen anhand einiger Beispiele näher erläutert, es zeigen:
- Fig. 1: Eine Anordnung zur Verbesserung der Teilstromhydrolyse
- Fig. 2: Eine Anordnung zur Verbesserung der Teilstromhydrolyse für Brennkraftmaschi- nen mit Turbolader

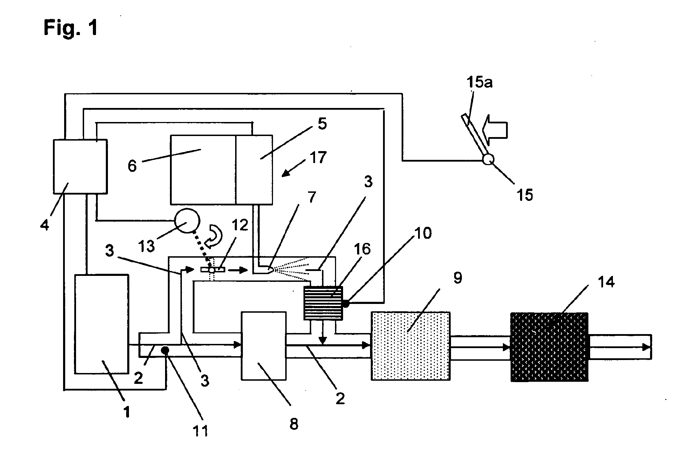

Ein in einem Nutzfahrzeug betriebenes Abgasnachbehandlungssystem mit Teilstromhydrolyse und integrierter Motorstaubremse ist in Fig. 1 schematisch dargestellt. Die von einer Brennkraftmaschine 1 durch die Verbrennungsvorgänge erzeugten Abgase - in allen Figuren durch Pfeile symbolisiert - gelangen zunächst als Abgasstrom 2 in den Abgastrakt. Dort zweigt vom Abgasstrom 2 ein Abgasteilstrom 3 ab, in welchem dem heißen Abgas ein Reduktionsmittel möglichst motornah beigegeben wird. Bei dem Reduktionsmittel handelt es sich, wie bei Kraftfahrzeugen mit SCR-Katalysator in der Praxis gebräuchlich, um eine wässrige Harnstofflösung, selbstverständlich ist aber auch die Zugabe von Harnstoff in fester Form denkbar, wie dies in der einschlägigen Fachliteratur bereits ausführlich beschrieben ist. Die Zumessung des Reduktionsmittels erfolgt durch eine in Abhängigkeit von Betriebsparametern der Brennkraftmaschine 1 mittels einer elektronischen Steuereinheit 4 gesteuerten Zumesseinrichtung 5, die die wässrige Harnstofflösung aus einem Vorratsbehälter 6 entnimmt und über eine Düse 7, je nach Betriebszustand der Brennkraftmaschine 1, in vorgegebenen Mengen in den Abgasteilstrom 3 einspritzt. Im heißen Abgas muss nun, im Falle einer wässrigen Harnstofflösung, der Wasseranteil verdampfen und der Harnstoff muss nach den vorstehenden, mit (7) und (8) bezeichneten Reaktionen in Ammoniak (NH₃) und Kohlendioxid (CO₂) übergeführt werden. Dies würde ohne zusätzliche Hilfsmittel bei zu niedrigen Abgastemperaturen (< 350°C) nur unvollständig gelingen, statt dessen würde nach (9) Cyanursäure und in geringerem Maße Ammelid, Ammelin und Melamin entstehen.Um dies weitgehend zu verhindern, ist stromab zur Zuführstelle für das Reduktionsmittel und stromauf zur Rückführung des Abgasteilstroms 3 in den Abgasstrom 2 ein Hydrolysekatalysator 16 angeordnet, wodurch die kritische Abgastemperatur ab der die vorgenannten problematischen Zersetzungsprodukte des Harnstoffs entstehen, auf ca. 160°C sinkt.

Parallel zur Zuführstelle des Reduktionsmittels ist ein Oxidationskatalysator 8 im Abgasstrom 2 angeordnet, dessen Aufgabe darin besteht, nach der vorstehend mit (2) bezeichneten Reaktion einen Teil des im Abgas enthaltenen Stickstoffmonoxids mittels des im Abgas vorhandenen überschüssigen Sauerstoffes zu Stickstoffdioxid aufzuoxidieren. Stromab zum Oxidationskatalysator 8 mündet der mit dem Reduktionsmittel beladene Abgasteilstrom 3 wieder in den Abgasstrom 2.

Die eigentliche selektive katalytische Reduktion der Stickoxide erfolgt stromab zur Einmündung des Abgasteilstroms 3 in den Abgasstrom 2, mittels eines SCR-Katalysators 9 der einen möglichst großen Anteil der im Abgas vorhandenen Stickoxide (NO_{X}) bei gleichzeitiger hoher Selektivität der Reduktion in Stickstoff und Wasserdampf überführen soll, ohne dass überschüssiger Ammoniak (NH₃) im Abgasstrom verbleibt. Gelingt dies aufgrund einer Fehldosierung des Reduktionsmittels, z.B. bei hochdynamischen Laständerungen, nicht vollständig, verbleibt also stromab des SCR-Katalysators 9 überschüssiger Ammoniak im Abgasstrom, so wird dieser durch einen dem SCR-Katalysator 9 nachgeordneten NH₃-Oxidationskatalysator 14 in Stickstoff und Wasserdampf übergeführt.

Zum teilweise oder vollständigen Absperren des Abgasteilstroms 3 ist, stromauf zur Zuführstelle des Reduktionsmittels und stromab zum Abzweig des Abgasteilstroms 3, eine Drosselvorrichtung 12 in Form einer Klappe angeordnet. Da die Drosselvorrichtung 12 selbstverständlich nicht nur als Klappe sonder auf vielfältige Weise realisiert werden kann, z.B. als Schieber oder Nadelventil oder als Kugelventil oder Tellerventil, um nur einige Möglichkeiten zu nennen, wird im folgenden der allgemeinere Begriff Drosselvorrichtung verwendet. Zum Schließen bzw. Öffnen der Drosselvorrichtung 12 ist ein Antrieb 13 vorgesehen, der seinerseits auf diese wirkt und von einer Steuereinheit 4 angesteuert wird. Bei dem Antrieb 13 kann es sich um einen elektrischen, hydraulischen oder pneumatischen Antrieb handeln, derartige Antriebe sind im Zusammenhang mit den oben genannten unterschiedlichen Drosselvorrichtungen bekannt.

Zur Erfassung der Temperatur des Hydrolysekatalysators 16 ist an diesem ein erster Temperatursensor 10 angeordnet, die Temperatur des Abgasstroms 2 wird mit Hilfe eines in diesem stromauf zum Abzweig des Abgasteilstrom 3 vom Abgasstrom 2 angeordneten zweiten Temperatursensors 11 erfasst.

Zum Detektieren einer hohen Last oder eines positiven oder negativen Lastsprungs ist ein mit der elektronischen Steuereinheit 4 verbundener Gaspedalsensor 15 vorgesehen, der die Stellung des Gaspedals 15a detektiert.

Das erfindungsgemäße Verfahren sieht nun vor, dass die über den Abgasteilstrom gerührte Abgasmenge in Abhängigkeit von der am Hydrolysekatalysator 16 anliegenden Temperatur, der Abgastemperatur und/ oder wenigstens eines Betriebsparameters so gesteuert wird, dass ein Unterschreiten der Temperaturgrenze von z.B. 160°C verhindert wird. Um das zu erreichen, wird die an dem Hydrolysekatalysator 16 anliegende Temperatur mittels des ersten Temperatursensors 10 erfasst und von der Steuereinheit 4 mit ersten Temperaturschwellwerten, die in dieser gespeicherten sind, verglichen um ein erstes Signal zu gewinnen. Weiter wird die Abgastemperatur über den zweiten Temperatursensor 11 erfasst und von der Steuereinheit 4 mit zweiten Temperaturschwellwerten, die in dieser gespeichert sind verglichen um ein zweites Signal zu gewinnen. Bezeichnet nun das erste Signal eine geringe Temperatur am Hydrolysekatalysators 16 und das zweite Signal eine hohen Abgastemperatur vor dem Hydrolysekatalysator 16 so wird über die Steuereinheit 4 ein Ansteuersignal für den Antrieb 13 der Drosselvorrichtung 12 erzeugt, derart dass die Drosselvorrichtung 12 öffnet. Durch dieses Öffnen der Drosselvorrichtung 12 wird der Hydrolysekatalysators aufgeheizt. Ein Begrenzen der Temperatur des Hydrolysekatalysators nach oben ist dann sinnvoll, wenn TiO₂ in seiner Anatas-Form als Aktivkomponente des Hydrolysekatalysators 12 eingesetzt wird. Übersteigt in einem solchen Fall die Katalysatortemperatur 600° C, kommt es zur Umwandlung von Anatas in Rutil und in Folge davon zu einem Rückgang der Aktivität des Hydrolysekatalysators. Zusätzlich kann es zu einer Oxidation des Reduktionsmittels kommen. Um dies zu vermeiden wird bei Überschreiten einer vorbestimmten oberen Temperaturschwelle am Hydrolysekatalysator (16), also dann, wenn das erste Signal eine zu hohe Temperatur am Hydrolysekatalysator (16) bezeichnet, über die Steuereinheit 4 ein Ansteuersignal für den Antrieb 13 der Drosselvorrichtung 12 erzeugt, derart dass die Drosselvorrichtung 12 teilweise schließt, so dass die über den Abgasteilstrom (3, 3') geführte Abgasmenge reduziert wird. Hierdurch wird ein weiterer Temperaturanstieg am Hydrolysekatalysator (16) vermieden.

Wird hingegen auf die vorstehend beschriebene Weise eine geringe Temperatur am Hydrolysekatalysator 16 und/ oder das Vorliegen einer geringen Abgastemperatur festgestellt, so wird über die Steuereinheit 4 und den Antrieb 13 die Drosselvorrichtung 12 ganz oder teilweise geschlossen um ein Auskühlen des Hydrolysekatalysators 16 zu verhindern. Gleichzeitig kann unabhängig vom tatsächlichen Reduktionsmittelbedarf durch die Steuereinheit 4 die Reduktionsmittelzufuhr durch entsprechendes Ansteuern der Zumesseinrichtung 5 teilweise oder ganz unterbunden werden.

Bei Unterschreiten einer unteren Temperaturschwelle am Hydrolysekatalysator 16 und bei gleichzeitigem Vorliegen einer mittels des zweiten Temperatursensors 11 detektierten und mittels der Steuereinheit 4 ausgewerteten Abgastemperatur unterhalb eines vorgegebenen Grenzwertes, wird die Drosselvorrichtung 12 ganz geschlossen und die Zufuhr von Reduktionsmittel über die Steuereinheit 4 und die von dieser angesteuerten Zumesseinrichtung 5 unterbunden. Die weitere Abkühlung des Hydrolysekatalysators wird so auf ein Minimum begrenzt.

Stellt die Steuereinheit 4 bei geschlossener Drosselvorrichtung 12 und unterbundener Reduktionsmittelzufuhr durch entsprechendes Auswerten des Signals des zweiten Temperatursensors 11 fest, dass die Abgastemperaturen auf einen Wert oberhalb eines vorgegebenen Grenzwertes ansteigt, wird die Drosselvorrichtung 12 durch entsprechendes Ansteuern des Antriebs 13 mittels der Steuereinheit 4 geöffnet und das Zufuhren von Reduktionsmittel wird durch entsprechendes Ansteuern der Zumesseinrichtung 5 wieder freigegeben.

Um bei plötzlicher Laständerung die Trägheit der vorstehend beschriebenen Regelung zu überwinden, ist es vorgesehen, in Abhängigkeit von der zeitlichen Auswertung der Stellung des Gaspedals 15a mittels eines die Gaspedalstellung signalisierenden Gaspedalsensors 15 durch die Steuereinheit 4 positive und negative Lastsprünge zu detektieren. Handelt es sich bei dem festgestellten Lastsprung um einen positiven Lastsprung, wird generell die Drosselvorrichtung 12 durch entsprechendes Ansteuern des Antriebes 13 durch die Steuereinheit 4 geöffnet, weil durch die höhere Last die Abgastemperatur stark ansteigen wird, und dieser schnelle Temperaturanstieg bei offener Drosselvorrichtung 12 zum schnellen Aufheizen des Hydrolysekatalysators 16 führt. Ist der Lastsprung hingegen negativ und die Temperatur am Hydrolysekatalysator gering, so wird über die Steuereinheit 4 und den Antrieb 13 die Drosselvorrichtung 12 zumindest teilweise geschlossen um ein beschleunigtes Auskühlen des Hydrolysekatalysators 16 zu verhindern.

Lastsprünge lassen sich natürlich auch durch die Auswertung anderer Einflussgrößen als der Gaspedalstellung detektierten. So bietet sich zur Feststellung von Lastsprüngen die Auswertung der Kraftstoffeinspritzmenge oder des Ladedrucks mittels der Steuereinheit 4 an.

Natürlich können auch andere, die Abgastemperatur beeinflussenden Betriebsparametern von der Steuereinheit 4 ausgewertet und zur Festlegung der Ansteuerung des Antriebs 13 der Drosselvorrichtung 12 mit herangezogen werden. Solche Betriebsparameter sind z. B. die Kraftstoffeinspritzmenge und/oder der Abgasdruck und/oder der Ladedruck und/oder die Öltemperatur und/oder die Motorkühlmitteltemperatur und/oder die Umgebungstemperatur und/oder die Motordrehzahl und/oder die Dosiermenge für das Reduktionsmittel. Auch die zeitliche Änderung dieser Betriebsparameter kann für die Ansteuerung des Antriebs 13 der Drosselvorrichtung 12 Berücksichtigung finden.

Bei in Fahrzeugen verbauten Brennkraftmaschinen, die über eine Motorbremse (in den Figuren nicht dargestellt) verfügen ist eine kurzfristige Aufheizung des Hydrolysekatalysators durch Ausnutzung des Motorbremszustandes möglich. Dazu wird der Betriebszustand "Motorbremse aktiv" von der Steuereinheit erfasst. Liegt ein Motorbremsvorgang vor, bleibt bei unterbrochener Zuführung des Reduktionsmittel, sowie unterbrochener Kraftstoffeinspritzung die Steuerklappe zumindest teilweise geöffnet. Das durch die Kompressionsarbeit der Brennkraftmaschine verdichtete Abgas wird jeweils im Ausschubtakt in den vom Abgasstrom abzweigenden Abgasteilstrom gedrückt, so dass die Temperatur des Abgasteilstroms stark ansteigt. Die Möglichkeit des Aufheizens des Hydrolysekatalysators durch Motorbremsvorgänge ist unabhängig von der Art der verwendeten Motorbremse. Sowohl bei einer Dekompressionsbremse, wie sie in der CH 429298 A beschrieben ist, bei einer Motorstaubremse, wie sie der DE 966212 B entnommen werden kann oder bei einer Kombination aus beiden Motorbremstypen, wie sie in der DE 3904497 C1 entnommen werden kann, ist diese Vorgehensweise anwendbar. Bei den beiden letztgenannten Motorbremstypen ist die Motorbremsklappe (in den Figuren nicht dargestellt) parallel zum Abgasteilstrom im Abgasstrom angeordnet und die Drosselvorrichtung im Abgasteilstrom ist nur geringfügig geöffnet um die Motorbremswirkung nicht zu beeinflussen.

An Stelle der oben beschriebenen messtechnischen Bestimmung der Abgastemperatur mittels des zweiten Temperatursensors 11, bzw. der Temperatur des Hydrolysekatalysators 16 mittels des ersten Temperatursensors 10 kann natürlich auch eine indirekte Bestimmung dieser Temperaturen vorgenommen werden, dazu bedient man sich sogenannter "Modelle". Bei solchen Modellen handelt es sich um im Steuergerät der Brennkraftmaschine gespeicherte Kennlinienwerte, Kennfeldwerte, mathematische Funktionen oder neuronale Netze, die Temperaturverläufe am Hydrolysekatalysator und/ oder Abgastemperaturen repräsentieren. Die Kennlinienwerte, Kennfeldwerte, Funktionswerte oder Werte aus neuronalen Netzen werden dabei im Vorfeld in Abhängigkeit von Betriebsparametern der Brennkraftmaschine, wie Kraftstoffeinspritzmenge und/oder Abgasdruck und/oder Ladedruck und/oder Öltemperatur und/oder Motorkühlmitteltemperatur und/oder Umgebungstemperatur und/oder Motordrehzahl und/oder Dosiermenge für das Reduktionsmittel an einer Referenzbrennkraftmaschine ermittelt. Um nun die Temperaturen im Abgastrakt oder am Hydrolysekatalysator zu bestimmen, kann mittels der Steuereinheit 4 - bei Vorliegen bestimmter Betriebsparameter der Brennkraftmaschine - über die von der Steuereinheit 4 erfassten Betriebsparameter und/ oder deren zeitliche Abfolge und/ oder deren logischer Verknüpfung, mit Hilfe der gespeicherten Kennlinien- oder Kennfeldwerte die Temperatur des Hydrolysekatalysators und/ oder die Abgastemperaturen vor und/ oder nach dem Hydrolysekatalysator indirekt bestimmt werden.

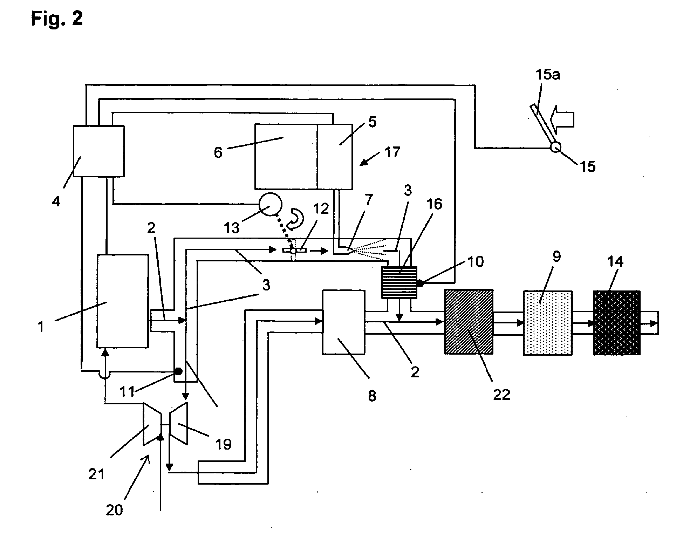

Bei heute in Fahrzeugen betriebenen Brennkraftmaschinen ist häufig eine wenigstens einstufige Turboladeranordnung vorhanden, die mit Hilfe der im Abgasstrom enthaltenen Abgasenthalpie die der Brennkraftmaschine zugeführte Verbrennungsluft verdichtet. Für die Abgasnachbehandlung wirft dies deshalb Probleme auf, weil das über die Turbinen des oder der Abgasturbolader strömende Abgas durch diese zwangsläufig stark abgekühlt wird. Ein solchermaßen abgekühlter Abgasstrom ist insbesondere im Anfahrbetrieb und im unteren Teillastbereich nicht in der Lage, für die Hydrolyse des Reduktionsmittels ausreichende Abgastemperaturen zu erreichen. Selbst wenn Hydrolysekatalysatoren eingesetzt werden, reicht das Temperaturniveau zumeist nicht aus. Abhilfe für dieses Problem schafft die Anordnung nach Fig. 2. Die dort gezeigt Anordnung unterscheidet sich von der Anordnung nach Figur 1 dadurch, dass die Turbine 19 eines Turboladers 20 stromauf des Abzweigs des Abgasteilstroms 3' vom Abgasstrom 2 und stromauf zum Oxidationskatalysator 8 angeordnet ist. Der von der Brennkraftmaschine 1 kommende Abgasstrom 2 verzweigt also bereits vor der Turbine 19 des Abgasturboladers 20 in den Abgasteilstrom 3' während das restliche Abgas über die Turbine 19 geführt ist, über diese den Verdichter 21 antreibt und sodann dem nachgeordneten Oxidationskatalysator 8 zugeführt wird. Durch diese Anordnung der Turbine 19 wird erreicht, dass das Temperaturniveau im Abgasteilstrom 3' hoch bleibt, weil keine Abkühlung durch die Turbine 19 erfolgt.

Die vorgenannten zusätzlichen Bauteile im Beispiel nach Figur 2 verändern die Funktionsweise der Anordnung gegenüber der in Verbindung mit dem Beispiel nach Figur 1 beschriebenen Funktionsweise nicht, was durch die Beibehaltung der Bezugszeichen deutlich gemacht ist. Um Wiederholungen zu vermeiden wird hinsichtlich der Anordnung der übrigen Bauteile und insbesondere der Beschreibung der Funktion auf die Beschreibung zu Figur 1 verwiesen.

Selbstverständlich lassen sich die vorstehend beschriebenen Anordnungen nach den Figuren 1 und 2 auch mit einem Partikelabscheider oder einem Partikelfilter kombinieren, wie dies explizit im Beispiel nach Figur 2 gezeigt ist. Dort befindet sich stromab zur Zusammenführung von Abgasteilstrom 3 und Abgasstrom 2 und stromauf zum SCR-Katalysator 9 ein Partikelabscheider 22 im Abgasstrom, der die im Abgas befindlichen Rußpartikel anlagert. Die Beseitigung der angelagerten Rußpartikel erfolgt kontinuierlich mit Hilfe des in dem Oxidationskatalysatoren 8 nach (2) aus NO und dem im Abgas enthaltenen Restsauerstoff erzeugten NO₂, das die Rußpartikel nach den Reaktionen (4), (5) und (6) zu CO bzw. CO₂ oxidiert. Die Anordnung des Partikelabscheiders oder Partikelfilters kann auch an anderer als der vorstehend beschriebenen Stelle, sowohl stromauf als auch stromab zum SCR-Katalysator erfolgen.

Die vorstehend beschriebenen Ausführungen lassen sich selbstverständlich mit dem Fachmann zugänglichem Fachwissen auf vielfältige Weise ausgestalten, ohne den grundlegenden erfinderischen Gedanken zu verlassen, den beschriebenen Ausführungsformen kommt somit nur Beispielcharakter zu.

## Patentansprüche

1. Verfahren zur Verbesserung der Hydrolyse eines Reduktionsmittels in einem Abgasnachbehandlungssystem für die selektive katalytische Reduktion von NO_{X} im Abgas einer mit Luftüberschuss betriebenen Brennkraftmaschine (1), wobei stromauf zum einem SCR-Katalysator (9) vom Abgasstrom (2) ein gegenüber diesem kleinerer Abgasteilstrom (3, 3') abzweigt, in dem eine Dosiereinrichtung (17) zum Zuführen eines Reduktionsmittels und stromab dazu ein Hydrolysekatalysator (16) angeordnet ist und wobei der Abgasteilstrom (3, 3') stromab zum Hydrolysekatalysator (16) und stromauf zum SCR-Katalysator (9) in den Abgasstrom (2) zurückgeführt ist, wobei
- die Temperatur am Hydrolysekatalysator (16) durch eine aktive Steuerung oder Regelung der über den Abgasteilstrom (3, 3') geführten Abgasmenge in vorgegebenen Grenzen gehalten wird, derart, dass mittels einer im Abgasteilstrom (3, 3'), stromauf oder Stromab zum Hydrolysekatalysator (16) angeordneten Drosselvorrichtung (12) , deren Öffnungsgrad steuer- und/ oder regelbar ist, der Abgasteilstrom (3, 3') ganz oder teilweise abgesperrt bzw. geöffnet wird, wenn gemessene oder indirekt bestimmte Temperaturschwellwerte am Hydrolysekatalysator (16) und im Abgasstrom (2) und/ oder Abgasteilstrom (3, 3') unter- oder überschritten werden und/ oder bestimmte Betriebszustände und/ oder Betriebszustandsänderungen der Brennkraftmaschine (1) eintreten, **dadurch gekennzeichnet dass**
- die über den Abgasteilstrom 3, 3') geführte Abgasmenge bei geringer Temperatur des Hydrolysekatalysators (16) und dem Vorliegen einer hohen Abgastemperatur vor dem Hydrolysekatalysator (16) und/ oder von Betriebsparametern und/ oder Betriebsparameteränderungen der Brennkraftmaschine (1), die zu einer solchen hohen Abgastemperatur führen, durch Öffnen der Drosselvorrichtung (12) erhöht wird, um ein Aufheizen des Hydrolysekatalysators (16) zu bewirken und dass bei geringer Temperatur am Hydrolysekatalysator (16) und/ oder dem Vorliegen einer geringen Abgastemperatur und/ oder von Betriebsparametern und/ oder Betriebsparameteränderungen der Brennkraftmaschine (1) die zu einer geringen Abgastemperatur führen, durch das teilweise Schließen der Drosselvorrichtung (12) die über den Abgasteilstrom (3, 3') geführte Abgasmenge soweit reduziert wird, wie es die zuzuführende Reduktionsmittelmenge noch zulässt, um eine ordnungsgemäße Aufnahme des Reduktionsmittels in den Abgasteilstrom (3, 3') zu gewährleisten.

2. Verfahren nach Anspruch 1, **dadurch gekennzeichnet, dass** dann, wenn ein erster vorbestimmte Temperaturschwellwert am Hydrolysekatalysator (12) unterschritten wird, zusätzlich zum teilweise Absperren des Abgasteilstroms (3, 3') durch entsprechendes Ansteuern der Dosiereinrichtung (17) die Zufuhr des Reduktionsmittels, unabhängig vom tatsächlichen Bedarf für die vollständige Reduktion der Stickoxide, reduziert oder unterbunden wird.

3. Verfahren nach Anspruch 1, **dadurch gekennzeichnet, dass** bei Unterschreiten einer vorbestimmten unteren Temperaturschwelle am Hydrolysekatalysator (16) und bei gleichzeitigem Vorliegen einer Abgastemperatur unterhalb eines vorgegebenen Grenzwertes, die Drosselvorrichtung (12) ganz geschlossen und die Zufuhr von Reduktionsmittel über die Dosiereinrichtung (17) unterbunden wird.

4. Verfahren nach Anspruch 1, **dadurch gekennzeichnet, dass** bei geschlossener Drosselvorrichtung (12) und unterbundener Reduktionsmittelzufuhr dann, wenn die Abgastemperaturen auf einen Wert oberhalb eines vorgegebenen Grenzwertes ansteigt und/ oder Betriebsparameter und oder Betriebsparameteränderungen der Brennkraftmaschine (1) vorliegen die zu einem solchen Anstieg der Abgastemperatur führen, die Drosselvorrichtung (12) geöffnet und das Zuführen von Reduktionsmittel über die Dosiereinrichtung (17) freigegeben wird.

5. Verfahren nach Anspruch 1, **dadurch gekennzeichnet, dass** bei Überschreiten einer vorbestimmten oberen Temperaturschwelle am Hydrolysekatalysator (16) durch das zumindest teilweise Schließen der Drosselvorrichtung (12) die über den Abgasteilstrom (3, 3') geführte Abgasmenge soweit reduziert wird, dass ein weiterer Temperaturanstieg am Hydrolysekatalysator (16) vermieden wird.

6. Verfahren nach einem der vorhergehenden Ansprüche **dadurch gekennzeichnet, dass** die Temperatur am Hydrolysekatalysator (16) messtechnisch direkt mittels eines Temperatursensors am Hydrolysekatalysator (16) ermittelt wird.

7. Verfahren nach einem der vorhergehenden Ansprüche **dadurch gekennzeichnet, dass** die Temperatur am Hydrolysekatalysator (16) indirekt mittels zweier Temperatursensoren zur Bestimmung der Abgastemperatur vor und nach dem Hydrolysekatalysator (16) bestimmt wird.

8. Verfahren nach einem der vorhergehenden Ansprüche **dadurch gekennzeichnet, dass** die Temperatur am Hydrolysekatalysator (16) und/ oder die Abgastemperatur über ein Modell bestimmt wird, wobei das Modell aus im Steuergerät der Brennkraftmaschine gespeicherten Kennlinienwerten, Kennfeldwerten, mathematische Funktionen oder neuronalen Netzen besteht, die Temperaturverläufe am Hydrolysekatalysator (16) und/ oder Abgastemperaturen repräsentieren, wobei die Temperaturverläufe in Abhängigkeit von Betriebsparametern der Brennkraftmaschine (1), wie Kraftstoffeinspritzmenge und/oder Abgasdruck und/oder Ladedruck und/oder die Öltemperatur und/oder Motorkühlmitteltemperatur und/oder Umgebungstemperatur und/oder Motordrehzahl und/oder Dosiermenge für das Reduktionsmittel an einer Referenzbrennkraftmaschine ermittelt wurden und dass bei Vorliegen bestimmter Betriebsparameter der Brennkraftmaschine und/ oder deren zeitlicher Abfolge, durch logische Verknüpfung mit den gespeicherten Kennlinienwerte oder Kennfeldwerte oder mathematischen Funktionen oder neuronalen Netzen, die Temperatur des Hydrolysekatalysators (16) und/ oder die Abgastemperaturen vor und/ oder nach dem Hydrolysekatalysator (16) indirekt bestimmt wird.

9. Anordnung zur Durchführung des Verfahrens gemäß einem der vorhergehenden Ansprüche wobei stromauf zum einem SCR-Katalysator (9) vom Abgasstrom (2) ein gegenüber diesem kleinerer Abgasteilstrom (3, 3') abzweigt, in dem eine Dosiereinrichtung (17) zum Zuführen eines Reduktionsmittels und stromab dazu ein Hydrolysekatalysator (16) angeordnet ist und wobei der Abgasteilstrom (3, 3') stromab zum Hydrolysekatalysator (16) und stromauf zum SCR-Katalysator (9) in den Abgasstrom (2) zurückgeführt ist, **dadurch gekennzeichnet, dass** im Abgasteilstrom (3, 3') eine Drosselvorrichtung (12) angeordnet ist und die Drosselvorrichtung (12) mittels einer, von einer Steuereinheit (4) mittels eines Steuersignals angesteuerten Antriebseinrichtung (13) antreibbar ist, wobei das Steuersignal in Abhängigkeit von wenigstens einem ersten Signalwert, der wenigstens einem vorgegebenen Temperaturwert am Hydrolysekatalysator (16) entspricht und/ oder wenigstens einem zweiten Signalwert, der wenigstens einem vorgegebenen Temperaturwert im Abgasstrom (2) oder Abgasteilstrom (3, 3') entspricht und/ oder wenigstens einem dritten Signalwert der wenigstens einem vorgegebenen Wert wenigstens eines Betriebsparameters der Brennkraftmaschine (1) und/ oder dessen zeitlicher Änderung entspricht, durch die Steuereinheit (4) gebildet ist.

10. Anordnung nach Anspruch 9, **dadurch gekennzeichnet, dass** der SCR-Katalysator (9) als Aktivkomponente Vanadium und/oder Vanadiumpentoxid und/oder Titandioxid und/oder Wolframoxid und/oder kupferhaltige Zeolithe und/oder eisenhaltige Zeolithe und/oder kobalthaltige Zeolithe enthält.

11. Anordnung nach Anspruch 9, **dadurch gekennzeichnet, dass** stromauf des SCR-Katalysators (9) ein Oxidationskatalysator (8) zur Bildung von NO₂ angeordnet ist.

12. Anordnung nach Anspruch 11, **dadurch gekennzeichnet, dass** der Oxidationskatalysator (8) als Aktivkomponente Platin und/oder Palladium und/oder Rhodium und/oder deren Oxide und/oder Zeolithe enthält.

13. Anordnung nach Anspruch 9, **dadurch gekennzeichnet, dass** stromauf oder stromab des SCR-Katalysators (9) eine Vorrichtung zur Abscheidung von Partikeln aus dem Abgas angeordnet ist.

14. Anordnung Anspruch 9, **dadurch gekennzeichnet, dass** der Hydrolysekatalysator (16) als Aktivkomponente Titan und/oder Silizium und/oder Vanadium und/oder Wolfram und/oder deren Oxide und/oder Zeolithe enthält.

15. Anordnung nach Anspruch 9, **dadurch gekennzeichnet, dass** der SCR-Katalysator (9) und die Vorrichtung zur Abscheidung der Partikel stromab der Rückführung des Abgasteilstroms (3, 3') in den Abgasteilstrom (2) angeordnet sind.

16. Anordnung nach Anspruch 9, **dadurch gekennzeichnet, dass** der Katalysator zur Hydrolyse (16) gleichzeitig Reduktionsaktivität für Stickoxide mit Hilfe von Ammoniak aufweist.

17. Anordnung nach Anspruch 9, **dadurch gekennzeichnet, dass** das Steuersignal aus Sensorsignalen, die in Abhängigkeit von der Kraftstoffeinspritzmenge und/oder dem Abgasdruck und/oder dem Ladedruck und/oder der Öltemperatur und/oder der Motorkühlmitteltemperatur und/oder der Umgebungstemperatur und/oder der Motordrehzahl und/oder der Dosiermenge für das Reduktionsmittel und/ oder der Abgastemperatur und/ oder der Temperatur des Hydrolysekatalysators (16) gewonnen werden und die mittels der Steuereinheit (4) erfasst und logisch verknüpft werden, gebildet ist.

18. Anordnung nach Anspruch 9, **dadurch gekennzeichnet, dass** der Abzweig des Abgasteilstroms (3') vom Abgasstrom (2) stromauf zu einer Turbine (19) wenigstens eines Abgasturboladers (20) liegt und die Rückführung des Abgasteilstroms (3') in den Abgasstrom (2) stromab zu wenigstens einer Turbine (19) wenigstens eines Abgasturboladers (20) erfolgt.

## Claims

1. A method of improving the hydrolysis of a reducing agent in an exhaust-gas after-treatment system for the selective catalytic reduction of NOₓ in the exhaust gas of an internal-combustion engine (1) operated with excess air, wherein an exhaust-gas partial flow (3,3'), which is smaller than the exhaust-gas flow (2) and in which a metering device (17) for supplying a reducing agent and downstream thereof an hydrolysis catalyst (16) are arranged, branches off from the exhaust-gas flow (2) upstream of an SCR catalyst (9) and wherein the exhaust-gas partial flow (3, 3') is conducted back into the exhaust-gas flow (2) downstream of the hydrolysis catalyst (16) and upstream of the SCR catalyst (9), wherein
- the temperature at the hydrolysis catalyst (16) is held within pre-determined limits by active control or regulation of the amount of exhaust gas conducted *via* the exhaust-gas partial flow (3, 3') in such a way that, by means of a throttle device (12), which is arranged in the exhaust-gas partial flow (3, 3') upstream or downstream of the hydrolysis catalyst (16) and the degree of opening of which is controllable and/or adjustable, the exhaust-gas partial flow (3, 3') is completely or partially shut off or opened if measured or indirectly determined temperature threshold values at the hydrolysis catalyst (16) and in the exhaust-gas flow (2) and/or exhaust-gas partial flow (3, 3') are not reached or are exceeded and/or if particular operating states and/or changes to the operating states of the internal-combustion engine (1) occur, **characterized in that**
- if the temperature of the hydrolysis catalyst (16) is low and if a high exhaust-gas temperature upstream of the hydrolysis catalyst (16) occurs and/or if operating parameters and/or changes to the operating parameters of the internal-combustion engine (1) occur which lead to this high exhaust-gas temperature, the amount of exhaust gas conducted *via* the exhaust-gas partial flow (3, 3') is increased by opening the throttle device (12) in order to effect heating of the hydrolysis catalyst (16), and **in that,** if the temperature at the hydrolysis catalyst (16) is low and/or if a low exhaust-gas temperature occurs and/or if operating parameters and/or changes to the operating parameters of the internal-combustion engine (1) occur which lead to a low exhaust-gas temperature, the amount of exhaust gas conducted *via* the exhaust-gas partial flow (3, 3') is reduced by partially closing the throttle device (12) to the extent that it still admits the amount of reducing agent to be supplied in order to ensure proper uptake of the reducing agent into the exhaust-gas partial flow (3, 3').

2. A method according to Claim 1, **characterized in that**, if a first pre-determined temperature threshold value at the hydrolysis catalyst (16) is not reached, in addition to partially shutting off the exhaust-gas partial flow (3, 3') by controlling the metering device (17) accordingly, the supply of reducing agent is reduced or stopped irrespective of the actual requirement for the complete reduction of the nitrogen oxides.

3. A method according to Claim 1, **characterized in that**, if a pre-determined lower temperature threshold at the hydrolysis catalyst (16) is not reached and if at the same time an exhaust-gas temperature below a pre-determined limit value occurs, the throttle device (12) is completely closed and the supply of reducing agent *via* the metering device (17) is stopped.

4. A method according to Claim 1, **characterized in that,** if the throttle device (12) is closed and the supply of reducing agent is stopped and if the exhaust-gas temperature rises to a value above a pre-determined limit value and/or operating parameters and/or changes to the operating parameters of the internal-combustion engine (1) occur which lead to such an increase in the exhaust-gas temperature, the throttle device (12) is opened and the supply of reducing agent *via* the metering device (17) is released.

5. A method according to Claim 1, **characterized in that**, if a pre-determined upper temperature threshold at the hydrolysis catalyst (16) is exceeded, the amount of exhaust gas conducted *via* the exhaust-gas partial flow (3, 3') is reduced by at least partially closing the throttle device (12) to the extent that a further temperature increase at the hydrolysis catalyst (16) is avoided.

6. A method according to any one of the preceding Claims, **characterized in that** the temperature at the hydrolysis catalyst (16) is measured directly by means of a temperature sensor at the hydrolysis catalyst (16).

7. A method according to any one of the preceding Claims, **characterized in that** the temperature at the hydrolysis catalyst (16) is determined indirectly by means of two temperature sensors for determining the exhaust-gas temperature upstream and downstream of the hydrolysis catalyst (16).

8. A method according to any one of the preceding Claims, **characterized in that** the temperature at the hydrolysis catalyst (16) and/or the exhaust-gas temperature is determined *via* a model, wherein the model consists of characteristic curve values, characteristic diagram values, mathematical functions or neuronal networks which are stored in the control unit of the internal-combustion engine and which represent temperature variations at the hydrolysis catalyst (16) and/or exhaust-gas temperatures, wherein the temperature variations were determined in a reference internal-combustion engine as a function of operating parameters of the internal-combustion engine (1), such as fuel-injection quantity and/or exhaust-gas pressure and/or supercharging pressure and/or the oil temperature and/or engine-coolant temperature and/or ambient temperature and/or engine speed and/or metering amount for the reducing agent, and **in that**, in the case of particular operating parameters of the internal-combustion engine and/or their temporal sequence, the temperature of the hydrolysis catalyst (16) and/or the exhaust-gas temperatures upstream and/or downstream of the hydrolysis catalyst (16) are indirectly determined by logical interconnection with the stored characteristic curve values or characteristic diagram values or mathematical functions or neuronal networks.

9. An arrangement for currying out the method according to any one of the receding Claims, wherein an exhaust-gas partial flow (3, 3'), which is smaller than the exhaust-gas flow (2) and in which a metering device (17) for supplying a reducing agent and downstream thereof an hydrolysis catalyst (16) are arranged, branches off from the exhaust-gas flow (2) upstream of an SCR catalyst (9) and wherein the exhaust-gas partial flow (3, 3') is conducted back into the exhaust-gas flow (2) downstream of the hydrolysis catalyst (16) and upstream of the SCR catalyst (9), **characterized in that** a throttle device (12) is arranged in the exhaust-gas partial flow (3, 3') and the throttle device (12) is drivable by a drive means (13) which is actuated by a control unit (4) by means of a control signal, wherein the control signal is formed by the control unit (4) as a function of at least one first signal value which corresponds to at least one predetermined temperature value at the hydrolysis catalyst (16) and/or at least one second signal value which corresponds to at least one pre-determined temperature value in the exhaust-gas flow (2) or exhaust-gas partial flow (3, 3') and/or at least one third signal value which corresponds to at least one pre-determined value of at least one operating parameter of the internal-combustion engine (1) and/or its temporal change.

10. An arrangement according to Claim 9, **characterized in that** the SCR catalyst (9) contains, as an active component, vanadium and/or vanadium pentoxide and/or titanium dioxide and/or tungsten oxide and/or copper-containing zeolites and/or iron-containing zeolites and/or cobalt-containing zeolites.

11. An arrangement according to Claim 9, **characterized in that** an oxidation catalyst (8) for the formation of NO₂ is arranged upstream of the SCR catalyst (9).

12. An arrangement according to Claim 11, **characterized in that** the oxidation catalyst (8) contains, as an active component, platinum and/or palladium and/or rhodium and/or their oxides and/or zeolites.

13. An arrangement according to Claim 9, **characterized in that** a device for the separation of particles from the exhaust gas is arranged upstream or downstream of the SCR catalyst (9).

14. An arrangement according to Claim 9, **characterized in that** the hydrolysis catalyst (16) contains, as an active component, titanium and/or silicon and/or vanadium and/or tungsten and/or their oxides and/or zeolites.

15. An arrangement according to Claim 9, **characterized in that** the SCR catalyst (9) and the device for the separation of particles are arranged downstream of the return of the exhaust-gas partial flow (3, 3') into the exhaust-gas flow (2).

16. An arrangement according to Claim 9, **characterized in that** the catalyst for the hydrolysis (16) simultaneously has reduction activity for nitrogen oxides with the aid of ammonia.

17. An arrangement according to Claim 9, **characterized in that** the control signal is formed from sensor signals which are obtained as a function of the fuel-injection quantity and/or the exhaust-gas pressure and/or the supercharging pressure and/or the oil temperature and/or the engine-coolant temperature and/or the ambient temperature and/or the engine speed and/or the metering amount for the reducing agent and/or the exhaust-gas temperature and/or the temperature of the hydrolysis catalyst (16) and which are picked up and logically interconnected by means of the control unit (4).

18. An arrangement according to Claim 9, **characterized in that** the branch point of the exhaust-gas partial flow (3') from the exhaust-gas flow (2) lies upstream of a turbine (19) of at least one exhaust-gas turbocharger (20), and the exhaust-gas partial flow (3') returns to the exhaust-gas flow (2) dowstream of at least one turbine (19) of at least one exhaust-gas turbocharger (20).

## Revendications

1. Procédé pour améliorer l'hydrolyse d'un agent réducteur dans un système de post-traitement des gaz d'échappement pour une réduction catalytique sélective des oxydes d'azote NOₓ dans les gaz d'échappement d'un moteur à combustion (1) fonctionnant avec un excédent d'air, selon lequel
- en amont d'un catalyseur SCR (9), on dérive de la veine des gaz d'échappement (2), une veine partielle de gaz d'échappement (3, 3') plus petite que celle-ci, dans laquelle se trouve une installation de dosage (17) pour fournir un agent réducteur et en aval un catalyseur d'hydrolyse (16), et
- la veine partielle des gaz d'échappement (3, 3') est réintroduite dans la veine des gaz d'échappement (2), en aval du catalyseur d'hydrolyse (16) et en amont du catalyseur SCR (9),
* la température du catalyseur d'hydrolyse (16) est maintenue dans des limites prédéfinies par une commande active ou une régulation de la quantité des gaz d'échappement dans la veine partielle des gaz d'échappement (3, 3') en ce qu'un dispositif d'étranglement (12) installé dans la veine partielle des gaz d'échappement (3, 3') en amont ou en aval du catalyseur d'hydrolyse (16), dont le degré d'ouverture peut être commandé ou régulé, ouvre partiellement ou totalement ou coupe la veine partielle des gaz d'échappement (3, 3') si des valeurs de seuil de température mesurées ou déterminées indirectement, au niveau du catalyseur d'hydrolyse (16) et dans la veine des gaz d'échappement (2) et/ou la veine partielle des gaz d'échappement (3, 3'), sont dépassées vers le haut ou vers le bas et/ou si des états de fonctionnement déterminés et/ou des variations d'état de fonctionnement déterminées se produisent dans le moteur à combustion (1),
**caractérisé en ce que**
* la quantité de gaz d'échappement passant dans la veine partielle des gaz d'échappement (3, 3'), à une faible température du catalyseur d'hydrolyse (16) ou dans le cas d'une température élevée des gaz d'échappement, en amont du catalyseur d'hydrolyse (16) et/ou de paramètres de fonctionnement et/ou de variations de paramètres de fonctionnement du moteur à combustion (1), se traduisant par une température trop élevée des gaz d'échappement, on augmente la quantité de gaz d'échappement passant dans la veine partielle des gaz d'échappement (3, 3'), par l'ouverture du dispositif d'étranglement (12) pour produire une élévation de température du catalyseur d'hydrolyse (16), et
* pour une température plus faible au niveau du catalyseur d'hydrolyse (16) et/ou en cas de température plus faible des gaz d'échappement et/ou de paramètres de fonctionnement et/ou de variations de paramètres de fonctionnement du moteur à combustion (1), se traduisant par une réduction de la température des gaz d'échappement, par la fermeture partielle du dispositif d'étranglement (12) on réduit suffisamment la quantité des gaz d'échappement dans la veine partielle des gaz d'échappement (3, 3') à un niveau autorisé par la quantité fournie d'agents réducteurs pour assurer une absorption correcte de l'agent réducteur dans la veine partielle des gaz d'échappement (3, 3').

2. Procédé selon la revendication 1,
**caractérisé en ce que**
si on passe en dessous d'un premier seuil de température prédéterminé au niveau du catalyseur d'hydrolyse (12), en plus d'une fermeture partielle de la veine partielle de gaz d'échappement (3, 3') par une commande correspondante de l'installation de dosage (17), par une commande appropriée du dispositif de dosage, on réduit ou on supprime la fourniture d'agent réducteur, indépendamment de la demande effective pour une réduction totale des oxydes d'azote.

3. Procédé selon la revendication 1,
**caractérisé en ce qu'**
en cas de dépassement en dessous d'un seuil de température, inférieur, prédéfini au niveau du catalyseur d'hydrolyse (16) et dans le cas où simultanément on a une température des gaz d'échappement inférieure à une valeur de seuil prédéfinie, on ferme complètement le dispositif de dosage (12) et on coupe l'alimentation en agent réducteur par l'installation de dosage (17).

4. Procédé selon la revendication 1,
**caractérisé en ce que**
le dispositif d'étranglement (12) étant fermé, et l'alimentation en agent réducteur coupée, si la température des gaz d'échappement augmente au-delà d'une valeur supérieure à une valeur limite prédéfinie et/ou les paramètres de fonctionnement et/ou les variations des paramètres de fonctionnement du moteur à combustion (1), conduisent à une telle montée de la température des gaz d'échappement, on ouvre le dispositif d'étranglement (12) et on autorise la fourniture d'agent réducteur par l'installation de dosage (17).

5. Procédé selon la revendication 1,
**caractérisé en ce qu'**
en cas de dépassement d'un seuil de température, supérieur, prédéfini au niveau du catalyseur d'hydrolyse (16) par la fermeture au moins partielle du dispositif d'étranglement (12) on réduit la quantité de gaz d'échappement de la veine partielle des gaz d'échappement (3, 3') suffisamment pour éviter que l'augmentation de la température se poursuive au niveau du catalyseur d'hydrolyse (16).

6. Procédé selon l'une des revendications précédentes,
**caractérisé en ce qu'**
par une technique de mesure on détermine la température au niveau du catalyseur d'hydrolyse (16), directement à l'aide d'un capteur de température installé dans le catalyseur d'hydrolyse (16).

7. Procédé selon l'une des revendications précédentes,
**caractérisé en ce qu'**
on détermine indirectement la température au niveau du catalyseur d'hydrolyse (16) à l'aide de deux capteurs de température qui déterminent la température des gaz d'échappement en amont et en aval du catalyseur d'hydrolyse (16).

8. Procédé selon l'une des revendications précédentes,
**caractérisé en ce qu'**
on détermine la température du catalyseur d'hydrolyse (16) et/ou la température des gaz d'échappement à l'aide d'un modèle,
- le modèle se composant de valeurs de courbes caractéristiques enregistrées dans l'appareil de commande du moteur à combustion, de valeurs de champs de caractéristiques, de fonctions mathématiques ou de réseaux neuronaux, représentant l'évolution de la température dans le catalyseur d'hydrolyse (16) et/ou des températures des gaz d'échappement,
- les courbes de températures se déterminant selon les paramètres de fonctionnement du moteur à combustion (1) tels que la quantité de carburant injectée et/ou la pression des gaz d'échappement et/ou la pression d'alimentation et/ou la température de l'huile et/ou la température du liquide de refroidissement du moteur et/ou la température ambiante et/ou le régime du moteur et/ou le dosage de l'agent réducteur dans un moteur à combustion de référence, et
- en cas de paramètres de fonctionnement définis du moteur à combustion et/ou de leurs successions chronologiques, par une combinaison logique avec les valeurs de courbes caractéristiques mémorisées ou des valeurs de champs de caractéristiques ou des fonctions mathématiques ou des réseaux neuronaux, on détermine indirectement la température du catalyseur d'hydrolyse (16) et/ou les températures de gaz d'échappement en amont et/ou en aval du catalyseur d'hydrolyse (16).

9. Dispositif pour la mise en oeuvre du procédé selon l'une des revendications précédentes,
selon lequel
- en amont d'un catalyseur SCR (9), on dérive une veine partielle de gaz d'échappement (3, 3'), dans la veine des gaz d'échappement (2), plus petite que celle-ci, dans laquelle une installation de dosage (17) fournit un agent réducteur avec en aval de celle-ci, un catalyseur d'hydrolyse (16), et
- la veine partielle des gaz d'échappement (3, 3'), est réintroduite dans la veine des gaz d'échappement (2), en aval du catalyseur d'hydrolyse (16) et en amont du catalyseur SCR (9),
**caractérisé en ce qu'**
- un dispositif d'étranglement (12) équipe la veine partielle des gaz d'échappement (3, 3'), et
- le dispositif d'étranglement (12) est actionné par l'intermédiaire d'un actionnement (13) commandé par une unité de commande (4) à l'aide d'un signal de commande,
- le signal de commande est formé par l'unité de commande (4), en fonction d'au moins une première valeur de signal qui correspond au moins à une valeur de température prédéfinie au niveau du catalyseur d'hydrolyse (16) et/ou d'au moins une seconde valeur de signal qui correspond au moins à une valeur de température prédéfinie dans la veine des gaz d'échappement (2) ou dans la veine partielle des gaz d'échappement (3, 3') et/ou d'une troisième valeur de signal d'au moins une valeur prédéfinie d'au moins un paramètre de fonctionnement du moteur à combustion (1) et/ ou de sa variation dans le temps.

10. Dispositif selon la revendication 9,
**caractérisé en ce que**
le catalyseur SCR (9) contient comme composants actifs, du vanadium et/ou du pentoxyde de vanadium et/ou du dioxyde de titane et/ou de l'oxyde de tungstène et/ou des zéolithes contenant du cuivre et/ou des zéolithes contenant du fer et/ou des zéolithes contenant du cobalt.

11. Dispositif selon la revendication 9,
**caractérisé par**
un catalyseur d'oxydation (8) pour former de l'oxyde d'azote NO₂ en amont du catalyseur SCR (9).

12. Dispositif selon la revendication 11,
**caractérisé en ce que**
le catalyseur d'oxydation (8) contient comme composants actifs du platine et/ou du palladium et/ou du rhodium et/ou leurs oxydes et/ou des zéolithes.

13. Dispositif selon la revendication 9,
**caractérisé par**
un dispositif pour séparer les particules chargées dans les gaz d'échappement, en amont ou en aval du catalyseur SCR (9).

14. Dispositif selon la revendication 9,
**caractérisé en ce que**
le catalyseur d'hydrolyse (16) contient comme composants actifs du titane et/ou du silicium et/ou du vanadium et/ou du tungstène et/ou leurs oxydes et/ou des zéolithes.

15. Dispositif selon la revendication 9,
**caractérisé en ce que**
le catalyseur SCR (9) et le dispositif pour séparer les particules, sont installés dans la veine partielle des gaz d'échappement (2), en aval du retour de la veine partielle des gaz d'échappement (3, 3').

16. Dispositif selon la revendication 9,
**caractérisé en ce que**
le catalyseur d'hydrolyse (16) a en même temps une activité réductrice pour les oxydes d'azote à l'aide d'ammoniac.

17. Dispositif selon la revendication 9,
**caractérisé en ce que**
le signal de commande est formé de signaux de capteurs obtenus en fonction de la quantité de carburant injectée et/ou de la pression des gaz d'échappement et/ou de la pression d'alimentation et/ou de la température de l'huile et/ou de la température de l'agent de refroidissement du moteur et/ou de la température ambiante et/ou de la vitesse de rotation du moteur et/ou du dosage de l'agent réducteur et/ou de la température des gaz d'échappement et/ou de la température du catalyseur d'hydrolyse (16), et ces signaux sont saisis à l'aide de l'unité de commande (4) et sont combinés par des combinaisons logiques.

18. Dispositif selon la revendication 9,
**caractérisé en ce que**
la dérivation de la veine partielle des gaz d'échappement (3') de la veine des gaz d'échappement (2), se fait en amont d'une turbine (19) d'au moins un turbocompresseur de gaz d'échappement (20) et le retour de la veine partielle des gaz d'échappement (3') dans la veine des gaz d'échappement (2), se fait en aval d'au moins une turbine (19) d'au moins un turbocompresseur de gaz d'échappement (20).
